# EUROPEAN PATENT SPECIFICATION

(11) **EP 2 346 212 B1**
(45) Date of publication and mention of the grant of the patent: **26.09.2012**
(21) Application number: 10197140.6
(22) Date of filing: 28.12.2010
(51) Int. Cl.: H04L 12/26

(54) **Communication error monitoring system of power device based on ethernet and method thereof**
Überwachungssystem für Kommunikationsfehler einer Leistungsvorrichtung basierend auf Ethernet und Verfahren dafür
Système de surveillance d'erreurs de communication d'un dispositif électrique basé sur Ethernet et son procédé

(30) Priority: 18.01.2010 KR 20100004347
(43) Date of publication of application: 20.07.2011
(73) Proprietor: LS Industrial Systems Co., Ltd, Gyeonggi-do 431-080 (KR)
(72) Inventor: Kim, Kyung ho, 361-160, Chungcheongbuk-do (KR)
(74) Representative: Löfgren, Håkan Bengt Alpo

(56) References cited:
- EP-A1- 1 396 963
- EP-A2- 1 857 899
- US-A1- 2004 138 786
- US-A1- 2009 248 933

## Description

### BACKGROUND OF THE DISCLOSURE

### Field of the Disclosure

The present disclosure relates to an Ethernet-based power montoring system, in particular to, communication error monitoring system and method thereof of a power device based on Ethernet capable of swiftly and accurately diagnosing communication error in a case of communication using Ethernet between a plurality of apparatuses and a monitoring unit.

### Description of the Related Art

Under a conversion circumstance of a communication in power systems such as a protection relay and a PLC (Programmable Logic Controller) installed in a substation gradually changing from a serial line to Ethernet, when communication error occurs, because a switch and an optic converter, a cable, other apparatuses are compositely related, it is difficult to find a cause on error.

A protection relay is an apparatus for protecting a network from various accidents of a line such as an overcurrent, a short circuit, and a ground fault, and since it periodically reports a line state of the actual spot and measurement data to a monitoring unit, reliability in communication with the monitoring unit is required. Apparatuses, such as protection relay or switch transceive important data for network and measurement via Ethernet. However, in view of the fact that there are no I/O devices for performing debugging responsive to communication error, an examination technology for high-priced equipment and network failure determination is additionally needed. And, in a case of occurrence of communication error, it takes many hours to analyze a cause of error and to restore a normal-state throughout the system. This means that a monitoring and control system has a fatal drawback on account of a communication.

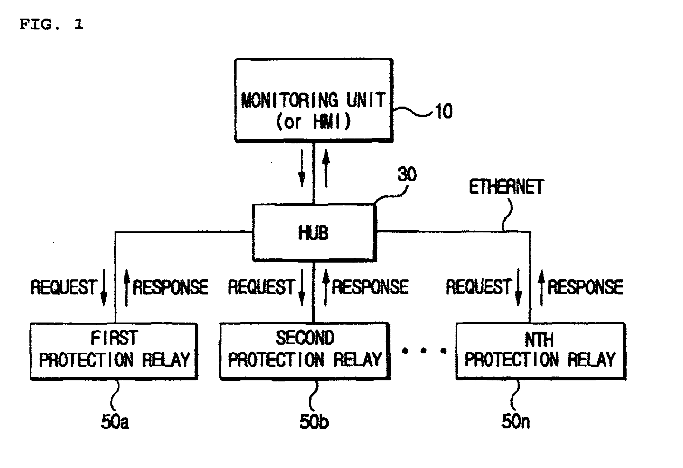

FIG. 1 indicates a diagram of an Ethernet-based power system according to the prior art, which includes a monitoring unit 10, a hub 30 and a plurality of protection relays 50a-50n.

Each kind of protection relays 50a-50n installed in a transformer communicates with the monitoring unit 10 such as an HMI apparatus through Ethernet and the hub 30.

When the monitoring unit 10 requests a specific data to a first protection relay 50a via Ethernet, the first protection relay 50a transmits a requested data to the monitoring unit 10. At this time, other protection relays 50b-50n operate by internal arithmetic, protection algorithm, and the like.

Further, after communicating with the first protection relay 50a, the monitoring unit 10 requests a specific data to a second protection relay 50b in waiting, the second protection relay 50b transmits a requested data to the monitoring unit 10.

As such, the monitoring unit 10 proceeds a communication by continuously repeating the process in an order of 1^{st} protection relay -> 2^{nd} protection relay -> ··· -> n^{th} protection relay -> 1^{st} protection relay -> ···.

That is, the monitoring unit 10 requests a predefined data by a user (binary data, analog data, event data, etc.) to protection relays, each of the protection relays acts to transmit the requested data.

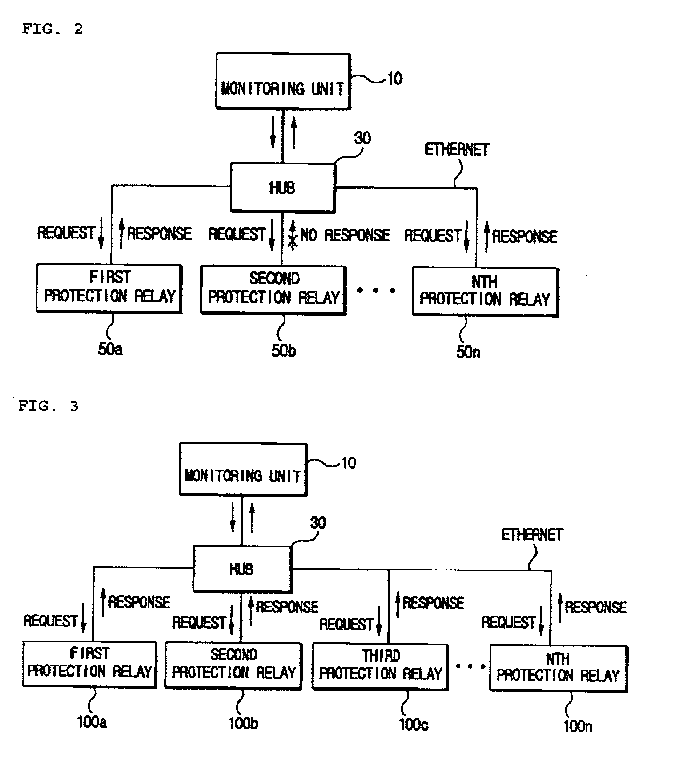

At this time, when an error occurs on communication lines or devices due to various reasons, it is next to impossible to receive data requested by a specific protection relay, as shown in FIG. 2.

For example, in a case the second protection relay 50b has communication error; the monitoring unit 10 fails to receive data requested by the second protection relay 50b. And, when an error occurs, subsequent to failure correction, the monitoring unit 10 continues to request data to the next protection relay. After requesting data up to n^{th} protection relay 50n with the last order and receiving all corresponding data, the monitoring unit 10 repeatedly acts to request data to the erred second protection relay 50b.

Herein, the monitoring unit 10 may instantly request again for a protection relay that has failed to make a response to the data request, or request again for data in the next turn.

As described above, the monitoring unit retransmits to the corresponding protection relay at a communication fault with a specific protection relay and inferringly determines normal/abnormal statuses of protection relays at a repeated communication fault.

Such an error diagnosis according to a communication state of protection relays requires a considerable time in determining an error state, and an error check process makes it difficult to monitor and control a system in real time.

Generally, the monitoring unit incessantly transmits a data request, at communication error with protection relays or at a communication failure due to a break of a communication line, and a fault of protection relays. Herein, because communication error with a protection relay continues even in case a collision between data does not cause an error, a continuous data request of protection relays may impede an effective operation of a system.

Also, a more intelligent monitoring unit may be configured not to perform a data request to a protection relay with which a communication fails, but it is difficult to reflect a state of protection relays in real time and constructing a system of which is not easy. Particularly, in a case components of protection relays are tangled and in many numbers, it is difficult to reflect the status of protection relays in real time.

In a data communication over Ethernet, data transmission/reception between a monitoring unit and a protection relay needs a time span of about 4msec through 50msec in a normal case, but in an abnormal case there needs a time in between 1sec and 5sec and a delay time waiting for data at the monitoring unit. Thus, as protection relays much more increases, a delay time occurring through the system increase in arithmetical progression.

Therefore, with a reference data capable of determining a communication normal/abnormal state of multiple devices through the system, the system can do an intelligent transmission/reception enabling of, based on the result, requiring data for a normal state device and on the contrary not requiring data for an abnormal state device, thus changing an operation method of a currently ineffective system.

Publications EP 1 857 899 and EP 1 396 936 are examples of known systems with monitoring units and slave units forming part of the background art of the present invention.

### SUMMARY OF THE DISCLOSURE

The present disclosure is related to communication error monitoring system of an Ethernet-based power device and a method thereof.

The present disclosure may be characterized in that the system comprises at least one or more slave devices for transmitting a response frame for a status check frame received from a master device, the master device for transmitting a status check frame to the slave devices, for determining communication error according to the response frame received from the slave devices, and for transmitting information on the device determined as with communication error to a monitoring unit, and the monitoring unit for receiving the information of the devices with the communication error from the master device, for requesting and collecting necessary data with the slave devices except for the devices with the communication error through Ethernet, wherein the master device, the slave devices, and the monitoring unit are connected via Ethernet between one another. And thus, the present disclosure provides communication error monitoring system and method thereof of an Ethernet based power device capable of diagnosing communication error swiftly and precisely in a case of communicating using Ethernet between a plurality of devices and an monitoring unit.

The present disclosure detects a specific device in real time with communication error occurred through a mutual communication between devices in a power system and reports information on an error occurred devices to the monitoring unit. And thus, it is an object of the disclosure to provide communication error monitoring system and method thereof of an Ethernet based power device possibly eliminating an unnecessary communication delay of an entire power system and improving a real-time response of a system.

To achieve the above-mentioned objective, communication error system of the present disclosure, characterized in that the system comprises at least one or more slave devices for transmitting a response frame for a status check frame received from a master device, the master device for transmitting a status check frame to the slave devices, for determining communication error according to the response frame received from the slave devices, and for transmitting information on the device determined as with communication error to a monitoring unit, and the monitoring unit for receiving the information of the devices with the communication error from the master device, for requesting and collecting necessary data with the slave devices except for the devices with the communication error through Ethernet, wherein the master device, the slave devices, and the monitoring unit are connected via Ethernet between one another.

Specifically, the master device is characterized by repeatedly transmitting a status check frame to a slave device from which the response frame is not received, and determining the slave device as with the communication error in a case an accumulated response failure times of a response frame exceeds a predefined reference times with regard to the repeatedly transmitted status check frame.

And, the master device is characterized by repeatedly transmitting a status check frame to the device determined as with the communication error, and informing the monitoring unit that communication error is repaired in a case a response frame is received from the device.

To achieve the aforementioned object, a monitoring method of communication error of the disclosure comprises, generating and transmitting a status check frame to a slave device interconnected via Ethernet according to a preset period by a master device, determining whether a response frame from the slave device is received, increasing a response failure times of the slave device, when the response frame from the slave device is not received, repeating a status check frame transmission to the slave device, determining if an accumulated response failure times exceeds a preset reference times and determining the slave device as with communication error in the case of exceeding the reference times, and transmitting in real time information on the device determined as with the communication error to an monitoring unit.

And, after determining the response frame is received, the method is characterized by further comprising transmitting a status check frame to other slave devices connected through Ethernet in a case of receiving the response frame from the slave device, and determining whether a response frame from them is received.

Also, the method is characterized in that after determining if the accumulated response failure times exceeds the preset reference times, as a determination result, in an unexceeding case, the master device retransmits a status check frame to the slave device after a certain time and determines whether a response frame is received.

A monitoring method of communication error of the present disclosure is characterized by further comprising not requesting data transmission to the device with the communication error by the monitoring unit.

### BRIEF DESCRIPTION OF THE DRAWINGS

FIGS. 1 and 2 are diagrams indicating an Ethernet-based power system according to the prior art;
FIG. 3 is a diagram indicating an Ethernet-based power system according to the present disclosure;
FIG. 4 is a diagram indicating a detailed construction of a protection relay applied to the present disclosure;
FIG. 5 is a diagram shown to describe communication error check method of a power system according to FIG. 3; and
FIG. 6 is a flow chart indicating communication error check procedure according to an exemplary embodiment of the present disclosure.

### • Reference numerals of main part of drawings

10: MONITORING UNIT
100a-100n: DEVICE (PROTECTION RELAY)
100a: 1^{st} DEVICE
100b-100n: 2^{nd} DEVICE

### DETAILED DESCRIPTION OF THE DISCLOSURE

Hereinafter, a preferred embodiment of the present disclosure will be explained in detail by reference to the accompanying drawings. Same components of the drawings are marked as a same possible sign where they are. Also, a detailed description of known-functions and constructions will be omitted as they can unnecessaralily obscure substances of the disclosure.

FIG. 3 is a diagram indicating an Ethernet-based power system pursuant to the present disclosure, in which the constituent comprises an upper level monitoring unit 10, a hub 30 and a plurality of protection relays 100a-100n.

Note that a device of an embodiment of the present disclosure is described in a case of a protection relays, for example, for briefness of description but not limited to this. The device may be selected from any one of a protection relay, a PLC (Programmable Logic Controller), a measurement instrument, and a power monitoring device, and the protection relay is called an IED (Intelligent Electronic Device).

The monitoring unit 10 is connected to a plurality of protection relays 100a-100n via the hub 30 and Ethernet, which may consist of a host computer such as an HMI (Human Machine Interaction) repeatedly requesting necessary data to each protection relay 100a-100n at a certain period and manageably storing a response message received from the protection relay.

The protection relays 100a-100n, to which specific data is requested from the monitoring unit 10, extracts the requested data and transmits the monitoring unit 10 via Ethernet.

Herein, the protection relays 100a-100n are divided into a master and at least one slave, the master checks a communication state of each slave by communicating with each of slave. In an embodiment, for convenience's sake, it is assumed that a first protection relay 100a is a master, and remaining protection relays 100b-100n are slaves.

The slave protection relays 100b-100n transmits a response frame in response to a status check frame requested from the master protection relay 100a. And, the master protection relay 100a transmits a status check frame to a certain slave protection relay connected via Ethernet. The master protection relay 100a determines communication error occurrence according to a response frame received or not from each slave protection relay and transmits information on the protection relay with communication error to the monitoring unit 10.

The monitoring unit 10 generaly acts to request and collect necessary data of a plurality of protection relays connected through Ethernet. And, on receiving the information on the protection relay with communication error from the master protection relay 100a, the monitoring unit 10 excludes the corresponding protection relay and requests data only for a remaining protection relay.

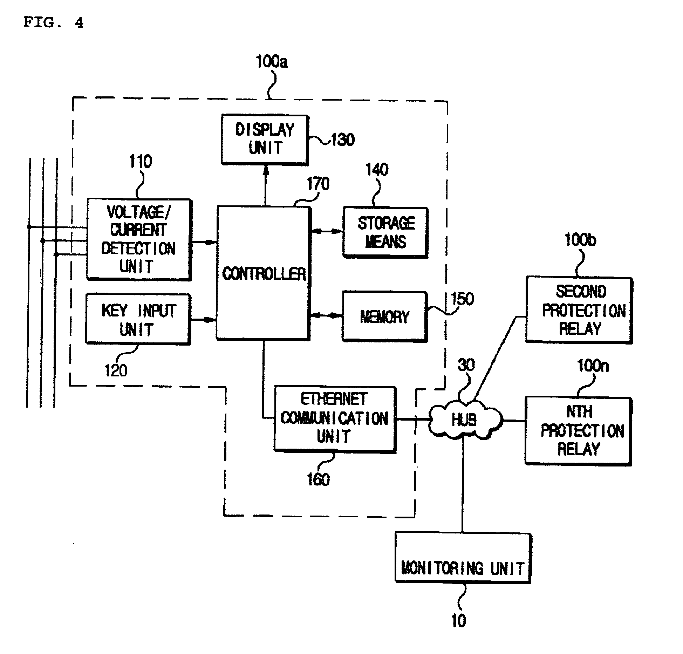

A detailed construction of the specific protection relay 100a is indicated herein in FIG. 4.

As shown in the figure, the protection relay 100a comprises a voltage/current detection unit 110, a key input unit 120, a display unit 130, a storage means 140, a memory 150, Ethernet communication unit 160, and a control unit 170.

The voltage/current detection unit 110 comprises a potential transformer (PT) converting a high-voltage on a line to a low-voltage by a certain ratio, and a current transformer (CT) converting a high-current flowing on a line to a low-current by a certain ratio.

The key input unit 120 receives a user setting command such as each kind of measurment and operation modes or a backup period of the protection relay 100a.

The display unit 130 consists of an LCD displaying various power source state detected by the voltage/current detection unit 110 and each of setting command through the key input unit 120 as characters or graphics.

The storage means 140 consists of a hard disk (HDD) or a nonvolatile memory storing by item, under the control of the control unit 170, event data, accident data, wave data, demand data and key-manipulation data inputted through the voltage/current detection unit 110 and the key-input unit120.

The memory 150 stores information on a communication state and error with other protection relays 100b-100n connected via Ethernet.

Ethernet communication unit 160 is responsible for data transmission/reception connected with the monitoring unit 10 and other protection relays 100b-100n via Ethernet.

The control unit 170 controls an operation of said each component, wherein it stores the measurement data from the voltage/current detection unit 110 in the storage means 140, analyzes a request frame transmitted by the monitoring unit 10, makes a frame, and transmits it to the monitoring unit 10 through Ethernet communication unit 160. Herein, the measurement data includes event data, accident data, wave data, demand data, key-manipulation data and so on.

In addition, the control unit 170 transmits a status check frame to other protection relays 100b-100n connected through Ethernet on a preset period and requests a response thereof, and stores and manages communication error state based on a response from each protection relay 100b-100n in the memory 150.

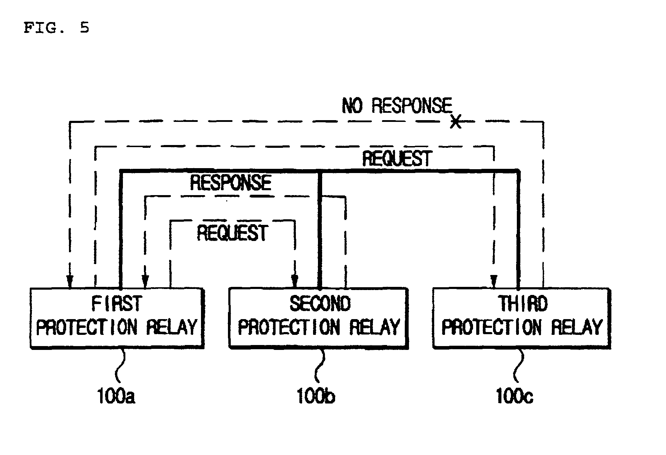

FIG. 5 is a diagram shown for the explanation of communication error check method of a power system according to FIG. 3. As illustrated in FIG. 5, in accordance with the present disclosure, any one protection relay 100a. of a plurality of protection relays 100a-100c interconnected through Ethernet is set as a master, and the remaining protection relays 100b, 100c are set as slaves. Herein, the protection relays 100a-100c has a leveled inter-relationship, but for convenience's sake divided as a master and slaves.

The master protection relay 100a periodically transmits a status check frame to the slave protection relays 100b and 100c, which generate a response frame and respond to transmit it to the master protection relay 100a. Of course, a response frame would not be transmitted from the slave protection relay 100c having communication error.

The master protection relay 100a periodically transmits a status check frame to the slave protection relays 100b, 100c and checks communication error according to a response, and in case of communication error, transmits in real time information on the protection relay with the communication error to the monitoring unit 10.

Utilizing the information transmitted by the master protection relay 100a, the monitoring unit 10 does not request a data transfer from the protection relay 100c in the abnormal state.

That is, the master protection relay 100a transmitting a status information on an entire devices to the upper level monitoring unit 10 sends out a status check frame to other slave protection relays 100b-100n in several msec intervals, and protection relays 100b-100n having received the status check frame send out a response frame to the master protection relay 100a. At this time, reasoning that a communication with the monitoring unit 10 is the type of TCP/IP, it is possible to communicate between protection relays 100a-100n with no effect on traffic.

Since each of protection relays 100a-100n may have separately a TCP/IP socket for communication with the monitoring unit 10 and a socket for communication between protection relays 100a∼100n in real time using one Ethernet, it is possible for a master protection relay 100a to respond while processing commands from the monitoring unit 10.

In a continuous failure of communication with a specific protection relay, the master protection relay 100a sends out information on the protection relays with communication error to the monitoring unit 10, which does not request data for the protection relays with communication error. Therefore, since there is no delay time waiting for a respond from protection relays with communication error, a real time performance of an entire monitoring system may be improved.

At this time, the master protection relay 100a periodically checks a restoration to a normal state in real time even in protection relays with communication error and informs the monitoring unit 10 that it is normally recovered at the moment of being normally recovered.

Such a communication has no relationship with the monitoring unit 10 due to a broadcast mode, having no consequence on traffic of an entire system.

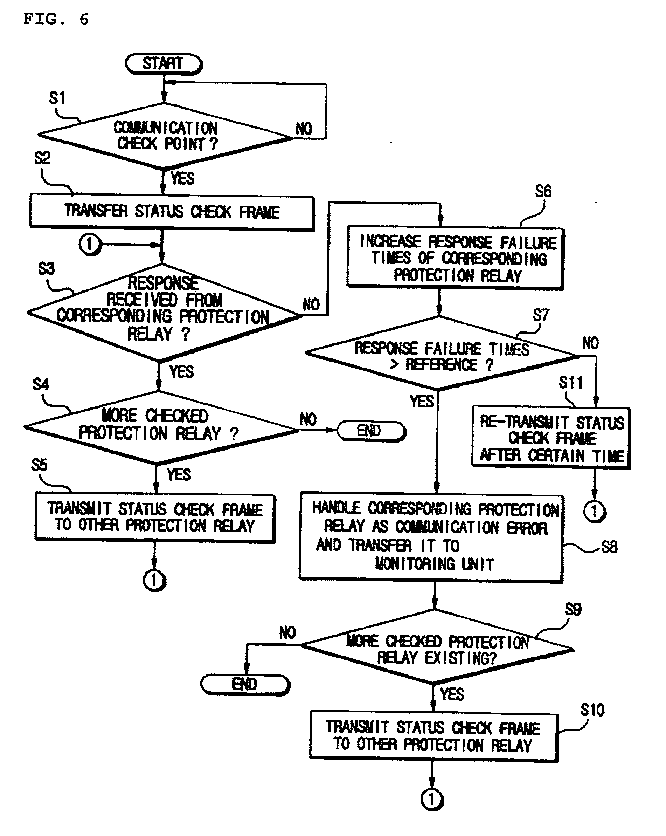

FIG. 6 is a flow chart indicating a real-time communication error monitoring method of an Ethernet-based power system according to the disclosure.

First, when a communication check point arrives at a predefined period (S1), a protection relay 100a set as a master generates and transmits a status check frame to a specific protection relay 100b designated as a slave (S2). Herein, the master protection relay 100a and at least one or more slave protection relays 100b-100n are interconnected via Ethernet.

Successively, the master protection relay 100a determines whether a response frame is received from the slave protection relay 100b having received the status check frame (S3).

Herein, when the response frame from the slave protection relay 100b is received, the master protection relay 100a determines if there is any more protection relay to check a communication status (S4). If completed for the communication check with all slave protection relays 100b∼100n, the master protection relay 100a stands-by until a next communication check period.

However, in a case slave protection relays 100c~100n to be checked remain, the master protection relay 100a transmits a status check frame to a next protection relay 100c (S5), and determines whether a response frame from said protection relay 100c is received (S3).

When a response frame from the slave protection relay 100c is not received, the master protection relay 100a increses a response failure times of the slave protection relay 100c (S6).

Continuingly, when the master protection relay 100a determines if an accumulated times of a respond failed protection relay 100c exceeds a reference times set to the memory 150 (S7), and in a case of exceeding the reference times, it decides a corresponding protection device 100c as a protection relay 100c having communication error and in real time transmits information on the protection relay 100c to the monitoring unit 10 (S8).

The monitoring unit 10 may be arranged not to require data for a protection relay 100c in an abnormal state with communication error.

Succeedingly, the master protection relay 100a determines if there remains still more protection relays 100n to be checked for a communication status and then transmits a status check frame to a next protection relay 100n, and determines if a response frame from a protection relay 100n having received the status check frame is delivered (S3).

And, in a case the accumulated response failure times does not exceed the reference times, the master protection relay 100a retransmits a status check frame to a corresponding protection relay 100c having a response failure to check the response after a certain time (S11).

As such, the present disclosure can recognize communication error swiftly and precisely in the event of communication error through a communication between protection relays 100a∼100n.

In a power system, communication equipment with devices may stay at a communication failure continuously or instantly for several reasons. No way of knowing such a communication state, the monitoring unit 10 is constructed to perform a communication between devices like a predefined flow diagram as shown in FIG. 6.

That is, the present disclosure is constructed to monitor a normal/abnormal state on a communication of an entire system in real time and transfer the result to the monitoring unit 10 by performing a communication between devices. And, the monitoring unit 10 can pause the data communication with a protection relay having a currently poor communication state, thereby eliminating an unnecessary action attempting a communication with the communication-incapable protection relay.

A master protection relay of the present disclosure can variously transmit a status check frame in a various method, for example, the apparatus may transfer sequentially every several millisecond or transmit batchedly to the entire devices at certain time intervals, or precede a frame request and response by 1:1 in a polling mode. Based on an actual spot, a more proper method can be possibly used.

While the present disclosure has been described in detail hereinabove centered on preferred embodiments, it may be possible by those skilled in the art that other forms of embodiments different from the detailed description of the present disclosure can be realized within an essential technical scope of the disclosure.

## Claims

1. Communication error monitoring system of an Ethernet based power device, the system comprising:
at least one or more slave devices for transmitting a response frame for a status check frame received from a master device (100a);
the master device (100a) for transmitting a status check frame to the slave devices, for determining whether there is any communication error according to whether the response frame has been received from the slave devices, and for transmitting information on the slave devices determined as with communication error to a monitoring unit (10); and
the monitoring unit (10) for receiving the information of the slave devices with the communication error from the master device (100a), for requesting and collecting data with the slave devices except for the slave devices with the communication error, wherein the master device (100a), the slave devices, and the monitoring unit (10) are connected via Ethernet between one another.

2. The system of claim 1, wherein the master device (100a) repeatedly transmits a status check frame to a slave device from which the response frame is not received, and determines the slave device as with the communication error in a case an accumulated response failure time of a response frame exceeds a predefined reference time with regard to the repeatedly transmitted status check frame.

3. The system of claim 1, wherein the master device (100a) repeatedly transmits a status check frame to the device determined as with the communication error, and informs the monitoring unit (10) that communication error is repaired in a case a response frame is received from the device.

4. The system of claim 1, wherein each of the master device (100a) and the slave devices is any one of a protection relay, a programmable logic controller, a measurement instrument and a power monitoring device.

5. Communication error monitoring method of an Ethernet based power system, comprising the steps of:
generating and transmitting a status check frame to a slave device interconnected via Ethernet according to a preset period by a master device (100a);
determining whether a response frame from the slave device is received;
increasing a response failure times of the slave device, when the response frame from the slave device is not received;
repeating a status check frame transmission to the slave device, determining if an accumulated response failure times exceeds a preset reference times and determining the slave device as with communication error in the case of exceeding the reference times;
transmitting in real time information on the slave device determined as with the communication error to a monitoring unit; and
requesting and collecting data with slave devices except for the slave device with the communication error by the monitoring unit (10).

6. The method of claim 5, wherein after the step of determining the response frame is received, the method further comprising the step of transmitting a status check frame to other slave devices connected through Ethernet in a case of receiving the response frame from the slave device, and determining whether a response frame from them is received.

7. The method of claim 5, wherein after the step of determining if the accumulated response failure time exceeds the preset reference times, as a determination result, in an unexceeding case, the master device retransmits a status check frame to the slave device after a predetermined time and determines whether a response frame is received.

## Patentansprüche

1. Kommunikationsfehler-Überwachungssystem einer ethernetbasierten Leistungsvorrichtung, wobei das System Folgendes umfasst:
wenigstens eine oder mehrere Slave-Vorrichtungen zum Senden eines Antwortrahmens auf einen Zustandsprüfrahmen, der von einer Master-Vorrichtung (100a) empfangen wird;
die Master-Vorrichtung (100a) zum Senden eines Zustandsprüfrahmens an die Slave-Vorrichtungen, um in Übereinstimmung damit, ob der Antwortrahmen von den Slave-Vorrichtungen empfangen worden ist, zu bestimmen, ob irgendein Kommunikationsfehler vorliegt, und zum Senden von Informationen über die Slave-Vorrichtungen, für die bestimmt worden ist, dass sie einen Kommunikationsfehler besitzen, an eine Überwachungseinheit (10); und
die Überwachungseinheit (10) zum Empfangen der Informationen der Slave-Vorrichtungen mit dem Kommunikationsfehler von der Master-Vorrichtung (100a), zum Anfordern und Sammeln von Daten von den Slave-Vorrichtungen mit Ausnahme der Slave-Vorrichtungen mit dem Kommunikationsfehler, wobei die Master-Vorrichtung (100a), die Slave-Vorrichtungen und die Überwachungseinheit (10) über Ethernet miteinander verbunden sind.

2. System nach Anspruch 1, wobei die Master-Vorrichtung (100a) einen Zustandsprüfrahmen an eine Slave-Vorrichtung, von der der Antwortrahmen nicht empfangen worden ist, wiederholt sendet und in einem Fall, in dem eine akkumulierte Anzahl des Ausfalls der Antwort eines Antwortrahmens eine vorgegebene Bezugsanzahl bezüglich des wiederholt gesendeten Zustandsprüfrahmens übersteigt, bestimmt, dass die Slave-Vorrichtung den Kommunikationsfehler besitzt.

3. System nach Anspruch 1, wobei die Master-Vorrichtung (100a) den Zustandsprüfrahmen an die Vorrichtung, von der bestimmt worden ist, dass sie den Kommunikationsfehler besitzt, wiederholt sendet und die Überwachungseinheit (10) in einem Fall, in dem ein Antwortrahmen von der Vorrichtung empfangen wird, informiert, dass der Kommunikationsfehler repariert ist.

4. System nach Anspruch 1, wobei jede der Master-Vorrichtung (100a) und der Slave-Vorrichtungen irgendeines der Folgenden ist: ein Schutzrelais, eine programmierbare Logiksteuereinheit, ein Messinstrument und eine Leistungsüberwachungsvorrichtung.

5. Kommunikationsfehler-Überwachungsverfahren eines ethernetbasierten Leistungssystems, das die folgenden Schritte umfasst:
Erzeugen und Senden eines Zustandsprüfrahmens an eine Slave-Vorrichtung, die über Ethernet angeschlossen ist, in Übereinstimmung mit einer vorgegebenen Dauer durch eine Master-Vorrichtung (100a);
Bestimmen, ob ein Antwortrahmen von der Slave-Vorrichtung empfangen wird;
Vergrößern einer Anzahl des Ausfalls der Antwort der Slave-Vorrichtung, wenn der Antwortrahmen von der Slave-Vorrichtung nicht empfangen wird;
Wiederholen des Sendens des Zustandsprüfrahmens an die Slave-Vorrichtung, Bestimmen, ob eine akkumulierte Anzahl des Ausfalls der Antwort eine vorgegebene Bezugsanzahl übersteigt, und Bestimmen, dass die Slave-Vorrichtung den Kommunikationsfehler besitzt, falls die Bezugsanzahl überschritten wird;
Senden in Echtzeit der Informationen über die Slave-Vorrichtung, von der bestimmt worden ist, dass sie den Kommunikationsfehler besitzt, an eine Überwachungseinheit; und
Anfordern und Sammeln der Daten von den Slave-Vorrichtungen mit Ausnahme der Slave-Vorrichtung mit dem Kommunikationsfehler durch die Überwachungseinheit (10).

6. Verfahren nach Anspruch 5, wobei nach dem Schritt des Bestimmens, ob der Antwortrahmen empfangen wird, das Verfahren ferner den Schritt des Sendens eines Zustandsprüfrahmens an die anderen Slave-Vorrichtungen, die durch ein Ethernet angeschlossen sind, in einem Fall des Empfangens des Antwortrahmens von der Slave-Vorrichtung und des Bestimmens, ob ein Antwortrahmen von ihnen empfangen wird, umfasst.

7. Verfahren nach Anspruch 5, wobei nach dem Schritt des Bestimmens, ob die akkumulierte Anzahl des Ausfalls der Antwort die vorgegebene Bezugsanzahl übersteigt, die Master-Vorrichtung in einem Fall des Nichtübersteigens einen Zustandsprüfrahmen als ein Bestimmungsergebnis nach einer vorgegebenen Zeit erneut an die Slave-Vorrichtung sendet und bestimmt, ob ein Antwortrahmen empfangen wird.

## Revendications

1. Système de surveillance d'erreurs de communication d'un dispositif d'alimentation par Ethernet, le système comprenant :
un dispositif esclave ou plus, servant à transmettre une trame de réponse associée à une trame de vérification d'état reçue d'un dispositif maître (100a) ;
le dispositif maître (100a), servant à transmettre une trame de vérification d'état aux dispositifs esclaves, à établir si une éventuelle erreur de communication est présente selon que la trame de réponse a été reçue des dispositifs esclaves, et à transmettre à une unité de surveillance (10) des informations sur les dispositifs esclaves présentant une erreur de communication ; et
l'unité de surveillance (10), servant à recevoir du dispositif maître (100a) les informations sur les dispositifs esclaves présentant une erreur de communication, à solliciter et collecter des données auprès des dispositifs esclaves à l'exception des dispositifs esclaves présentant une erreur de communication,
lesquels dispositif maître (100a), dispositifs esclaves et unité de surveillance (10) sont reliés les uns aux autres par Ethernet.

2. Système selon la revendication 1, dans lequel le dispositif maître (100a) transmet à plusieurs reprises une trame de vérification d'état à un dispositif esclave duquel la trame de réponse n'a pas été reçue, et établit que le dispositif esclave présente une erreur de communication si un nombre cumulé d'échecs de réponse associé à une trame de réponse dépasse un nombre de référence prédéfini relativement à la trame de vérification d'état transmise à plusieurs reprises.

3. Système selon la revendication 1, dans lequel le dispositif maître (100a) transmet à plusieurs reprises une trame de vérification d'état à un dispositif esclave présentant une erreur de communication, et informe l'unité de surveillance (10) du fait que l'erreur de communication est réparée si une trame de réponse est reçue du dispositif.

4. Système selon la revendication 1, dans lequel le dispositif maître (100a) et le ou chaque dispositif esclave constituent chacun l'un quelconque des dispositifs suivants : un relais de protection, un automate programmable, un instrument de mesure et un dispositif de surveillance de l'alimentation.

5. Procédé de surveillance d'erreurs de communication d'un système d'alimentation par Ethernet, le procédé comprenant les étapes consistant à :
générer et transmettre par un dispositif maître (100a) une trame de vérification d'état à un dispositif esclave interconnecté par Ethernet selon une période prédéfinie ;
établir si une trame de réponse est reçue du dispositif esclave ;
augmenter un nombre d'échecs de réponse du dispositif esclave si la trame de réponse n'est pas reçue du dispositif esclave ;
réitérer une transmission de trame de vérification d'état au dispositif esclave, établir si un nombre cumulé d'échecs de réponse dépasse un nombre de référence prédéfini et établir que le dispositif esclave présente une erreur de communication si le nombre cumulé d'échecs de réponse dépasse le nombre de référence prédéfini ;
transmettre en temps réel à une unité de surveillance des informations sur le dispositif esclave présentant une erreur de communication ; et
solliciter et collecter par l'unité de surveillance (10) des données auprès de dispositifs esclaves à l'exception du dispositif esclave présentant une erreur de communication.

6. Procédé selon la revendication 5, comprenant en outre, suite à l'étape consistant à établir si la trame de réponse est reçue, l'étape consistant à transmettre une trame de vérification d'état à d'autres dispositifs esclaves connectés par Ethernet si la trame de réponse est reçue du dispositif esclave, et à établir si une trame de réponse est reçue des autres dispositifs esclaves.

7. Procédé selon la revendication 5, comprenant en outre, suite à l'étape consistant à établir si le nombre cumulé d'échecs de réponse dépasse le nombre de référence prédéfini, et s'il est établi que le nombre cumulé d'échecs de réponse ne dépasse pas le nombre de référence prédéfini, l'étape consistant à retransmettre par le dispositif maître une trame de vérification d'état au dispositif esclave après un laps de temps préétabli et à établir par le dispositif maître si une trame de réponse est reçue.
